# EUROPEAN PATENT SPECIFICATION

(11) **EP 2 753 657 B1**
(45) Date of publication and mention of the grant of the patent: **10.06.2015**
(21) Application number: 12753913.8
(22) Date of filing: 04.09.2012
(51) Int. Cl.: C08J 9/20, C08J 9/00, C08L 25/06, C08K 3/34, C08L 71/12

(54) **WATER EXPANDABLE POLYMER BEADS**
WASSEREXPANDIERBARE POLYMERKÜGELCHEN
PERLES DE POLYMÈRE EXPANSIBLES PAR L'EAU

(30) Priority: 09.09.2011 EP 11007344
(43) Date of publication of application: 16.07.2014
(73) Proprietor: SAUDI BASIC INDUSTRIES CORPORATION (SABIC), Riyadh 11422 (SA)
(72) Inventor: GHAMDI, Ghurmallah, 11422 Riyadh (SA); JANSEN, Martinus Adrianus Gertrudus, 5600 HG Eindhoven (NL); NELISSENM, Laurentius Nicolaas Ida Hubertus, 5600 HG Eindhoven (NL)
(74) Representative: Terpsma, Jelle Philip
(86) International application number: PCT/EP2012/003688
(87) International publication number: WO 2013/034276

(56) References cited:
- WO-A2-2007/030719
- US-A1- 2009 326 134
- SHEN J ET AL: "Synthesis and foaming of water expandable polystyrene-clay nanocomposites", POLYMER, ELSEVIER SCIENCE PUBLISHERS B.V, GB, vol. 47, no. 18, 23 August 2006 (2006-08-23), pages 6303-6310, XP028060646, ISSN: 0032-3861, DOI: 10.1016/J.POLYMER.2006.06.068 [retrieved on 2006-08-23] cited in the application

## Description

The present invention relates to a process for the preparation of water expandable polymer beads (WEPS).

Commercially available expandable polystyrene beads (EPS) generally use pentane as the blowing agent. The application of pentane and its isomers results in homogeneous EPS foams of low density. However, one main disadvantage of using pentane or its isomers is the harmfulness to the environment. Research showed that both pentane and its isomers contribute to ozone formation in the lower atmosphere. Also carbon dioxide, which contributes to the greenhouse effect, is being formed during the photo-oxidation of pentane.

A dissertation of the University of Eindhoven "Water Expandable Polystyrene" by J. J. Crevecoeur dating from 1997 describes a process for the production of WEPS, in which water, finely distributed in styrene, is first of all emulsified by means of surface-active substances, after which the styrene is polymerized up to a conversion of 50%, the mixture is suspended in water with phase inversion and the styrene is finally polymerized to completion by means of peroxide initiators. The surface-active substances used are amphiphilic emulsifiers, eg sodium bis(2-ethylhexyl)sulfosuccinate (AOT) or block copolymers of sodium styrenesulfonate (SSS) and styrene which were prepared insitu using a phase transfer catalyst as described in US6242540. All of these substances exhibit both a hydrophilic and a hydrophobic moiety and are thus capable of emulsifying water in styrene.

US6160027 describes the preparation of beads consisting of polystyrene homopolymer. An additional emulsifier (preferably sodium bis(2-ethylhexyl)sulfosuccinate: AOT) is used in the prepolymerization step to emulsify the water droplets in the polystyrene/styrene prepolymer mixture. The problem of using emulsifiers with long linear alkyl chains is that the miscibility of these aliphatic emulsifier tails with the aromatic styrene/polystyrene phase decreases with increasing conversion of the styrene/polystyrene mixture. At a certain degree of conversion showing a certain high viscosity, destabilization of the inverse emulsion can take place which results in coalescence of dispersed water droplets.

Polymer, 2006, 47, 6303-6310 and WO2007/030719 describe a method similar to the method developed by Crevecoeur et al. to prepare WEPS beads. However, sodium montmorillonite nanoclay (Na⁺MMT) was added to the emulsified water as a water absorber/carrier. For these reactions, an emulsifier sodium bis(2-ethylhexyl) sulfosuccinate (AOT) was used as emulsifier. An improved water uptake and reduced water loss during storage due to the presence of montmorillonite nanoclay is described. WEPS foams with a density of less than 50 kg/m³ were obtained. According to these publications, the montmorillonite nanoclay forms a layer around the cell wall during foaming of the WEPS beads. This layer reduces free diffusion of water out of the bead during the foaming procedure so that more water is available for expansion and hence larger expansion ratios are obtained. Furthermore, it was found that the presence of nanoclay reduces the loss of water during storage.

There is a need in the industry for a novel process for the preparation of water expandable polymer beads.

It is an object of the present invention to provide a novel process for the preparation of water expandable polymer beads in which the above and/or other problems are reduced. According to the present invention, there is provided a process for the emulsifier-free preparation of water expandable polymer beads, which process comprises the steps of:
a) providing an emulsifier-free starting composition comprising styrene and a polyphenylene ether (PPE) resin,
b) prepolymerizing the starting composition to obtain a prepolymer composition,
c) adding an aqueous dispersion of a modifier-free nanoclay to the prepolymer composition to obtain an inverse emulsion,
d) suspending the inverse emulsion obtained by step c) in an aqueous medium to yield an aqueous suspension of suspended droplets and
e) polymerizing the monomers in the droplets of the suspension obtained by step d) to obtain the water expandable polymer beads.

It was surprisingly found that the combination of using the PPE resin and the modifier-free nanoclay allows a very stable suspension polymerization system which results in polymer beads having a good expandability. Further, the WEPS polymers prepared according to the present invention have a high glass transition temperature (Tg). The higher Tg results in an efficient expansion of the beads and subsequent reduction of the foam density.

Known emulsifiers used for the preparation of water-expandable polymer beads in the prior art are sorbitan carboxylates, sorbitol or mannitol carboxylates, glycol or glycerol carboxylates, alkanolamides, alkyl phenols and dialkyl ethers (any of these emulsifiers may or may not contain a polyalkoxy chain with 1 to 20 oxyalkylene groups). Other known emulsifiers used for the preparation of water-expandable polymer beads are salts of long chain (C8 -C30) carboxylic acids, long chain (C8-30) alkyl sulphonic acids. Other known emulsifiers used for the preparation of water-expandable polymer beads are alkylarylsulphonic acid and sulphosuccinic acid. Furthermore, high-molecular-weight fatty amines, ammonium or other nitrogen derivatives of long chain carboxylic acids.

The term "emulsifier-free process" is herein meant a process in which the starting composition includes no or little amount, e.g. less than 0.01 wt% (with respect to the monomers and any polymers in the starting composition), of the emulsifiers mentioned in the preceding paragraph.

The combination of the PPE resin and the nanoclay resulted in water expandable polymer beads having a surprisingly high Tg and water uptake. The water expandable polymer beads obtained according to the process of the present invention have improved water droplet distribution throughout beads, improved melt strength and reduced foam collapse. Improved pre-expansion was observed, as well as a decreased density and a smoother surface of the expanded polymer beads.

The presence of the PPE resin and the modifier-free nanoclay provided the possibility of an emulsifier-free process for the preparation of water expandable polymer beads. It was advantageously found that the presence of the PPE resin does not influence the stability of the suspension subjected to the suspension polymerization step. In comparison, addition of the emulsifier was found to result in a complete inverse emulsion. Hence, beads were no longer present.

The addition of the mofifier-free nanoclay increases the water uptake, but in the cases where the nanoclay is added without the presence of the PPE, the water droplets inside the WEPS beads are rather large and inhomogeneously distributed. The use of the PPE resin and the nanoclay in combination resulted in polymer beads with a high water uptake in which a homogeneous distribution of the nanoclay/water dispersion is achieved.

It was found that the addition of the nanoclay dispersion should be done after some portion of the monomers have been converted to copolymer. Without wishing to be bound by any theory, it is thought that the viscosity of the prepolymer mixture has to be sufficiently high prior to addition of the dispersion of nanoclay/water mixture. Water droplet coagulation and inhomogeneous droplet distribution may occur when the nanoclay dispersion is added to a low viscous reaction mixture. When the nanoclay dispersion is added, the degree of conversion from the monomers to polymer is preferably 20 to 55%, based on the monomers. The degree of conversion can be determined by evaporating the volatile monomers from a sample of the reaction mixture of a known weight and measuring the residual weight of the non-volatile polymer. The weight of the polymer made from the added monomers can be determined taking into account the initially weighed amount of PPE or PS homopolymer. The sample may be dried e.g. at 60 °C for at least 24 hours under vacuum for evaporation of entrapped water.

The nanoclay used in the present invention is a modifier-free nanoclay. It was found that modified nanoclays resulted in a decreased suspension stability. The resulting beads were non-spherical "egg-shaped" beads, or in some cases the process results even in complete suspension failure which is comparable when using AOT. In comparison, modifier-free nanoclays were found not to decrease the suspension stability and therefore are suitable. Modifier-free nanoclays used in the present invention are not particularly limited and include modifier-free nanoclays such as sodium montmorillonite (Na⁺MMT), and calcium montmorillonite (Ca²⁺MMT), which can be synthetic or natural. Although calcium montmorillonite typically exists as aggregates formed of layered structures, the aggregates can be exfoliated in a water-based solution. It is to be appreciated that layered talc minerals may be included in addition to, or in place of, the modifier-free nanoclays, and such embodiments are considered to be within the purview of this invention. In preferred embodiments, the nanoclay is Na⁺MMT. It is commercially available from e.g. Southern Clay Products, Inc or Nanocor. The sodium montmorillonite available from Nanocor is sold under the name Nanocor PGV. Nanocor PGV has an aspect ratio of 150-200 and a maximum moisture uptake of 18 wt%. The sodium montmorillonite available from Southern Clay Products is sold under the name Nanofil116 and has a moisture content of 11 wt%.

The polymerization step in the process according to the present invention is performed in the presence of the polyphenylene ether resin. The PPE resin is normally a homo- or copolymer having units of the formula 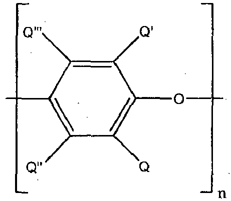 wherein Q, Q', Q", Q'" are independently selected from the group consisting of hydrogen, halogen, hydrocarbon, halohydrocarbon, hydrocarbonoxy and halohydrocarbonoxy; and n represents the total number of monomer units and is an integer of at least about 20, and more usually at least 50.

The polyphenylene ether resin can be prepared in accordance with known procedures, such as those described in Hay, U.S. Pat. Nos. 3,306,874 and 3,306,875; and Stamatoff, U.S. Pat. Nos. 3,257,357 and 3,257,358; from the reaction of phenols including but not limited to 2,6-dimethylphenol; 2,6-diethylphenol; 2,6-dibutylphenol; 2,6-dilaurylphenol; 2,6-dipropylphenol; 2,6-diphenylphenol; 2-methyl-6-tolylphenol; 2-methyl-6-methoxyphenol; 2,3,6-trimethylphenol; 2,3,5,6-tetramethylphenol; and 2,6-diethyoxyphenol.

Each of these may be reacted alone to produce the corresponding homopolymer, or in pairs or with still other phenols to produce the corresponding copolymer. Examples of the homopolymer include poly(2,6-dimethyl-1, 4-phenylene)ether, poly(2,6-diethyl-1,4-phenylene)ether, poly(2,6-dibutyl-1,4-phenylene)ether, poly(2,6-dilauryl-1, 4-phenylene)ether, poly(2,6-dipropyl-1,4-phenylene)ether, poly(2,6-diphenyl-1,4-phenylene)ether, poly(2-methyl-6-methoxy-1,4-phenylene)ether, poly(2-methyl-6-butyl-1,4-phenylene)ether, poly(2,6-dimethoxy-1,4-phenylene)ether, poly(2,3,6-trimethyl-1,4-phenylene)ether, poly(2,3,5,6-tetramethyl-1,4-phenylene)ether, and poly(2,6diethyoxy-1,4-phenylene)ether. Examples of the copolymer include, especially those of 2,6-dimethylphenol with other phenols, poly(2,6-dimethyl-co-2,3,6-trimethyl-1,4-phenylene)ether and poly(2,6-methyl-co-2-methyl-6-butyl-1,4-phenylene)ether.

For the purposes of the present invention, an especially preferred family of polyphenylene ethers includes those having alkyl substitution in the two positions ortho to the oxygen ether atom, i.e. those of the above formula wherein Q and Q' are alkyl, most preferably having 1 to 4 carbon atoms. Illustrative members of this class are: poly(2,6-dimethyl-1,4-phenylene)ether; poly(2,6-diethyl-1,4-phenylene)ether; poly(2-methyl-6-ethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene) ether; and the like.

The most preferred polyphenylene ether resin for purposes of the present invention is poly(2,6-dimethyl-1,4-phenylene)ether.

The weight ratio of styrene in the starting composition and the PPE resin is preferably between 99:1 to 70:30, more preferably 99:1 to 80:20, even more preferably 95:5 to 85:15.

The starting composition may further comprise a polar comonomer containing a carbon-to-carbon double bond and the prepolymer composition obtained by step b) comprises styrene, the polar comonomer and their copolymer.

The term "polar" as referred to herein is well-known to the skilled person in the art; for instance, a polar molecule is defined in the prior art as a molecule having a permanent electric dipole moment or polarity refers in the prior art to a separation of electric charge leading to a molecule or its chemical groups having an electric dipole or multipole moment, molecular polarity being typically dependent on the difference in electronegativity between atoms in a compound and the asymmetry of the compound's structure; the polar molecules interact through dipole-dipole intermolecular forces and hydrogen bonds (see e.g. http://en.wikipedia.org/wiki/Chemical_polarity and R. T. Morrison and R. N. Boyd, Organic chemistry, 5th edition, Chapter 1). In G. Solomons, Fundamentals of Organic Chemistry, 5^{th} edition, Chapter I, page 38, the term polar bond is also described as when two atoms of different electronegativities form a covalent bond; due to this difference in electronegativity, the electrons are not shared equally between them. The atom with the greater electronegativity draws the electron pair closer to it, and a polar covalent bond results. A polar comonomer as referred to in the present invention can be defined thus as a molecule comprising at least one carbon to carbon double bond together with at least two atoms of different electronegativities forming a covalent bond with each other.

The polar comonomer containing a carbon-to-carbon double bond may be selected from a wide range of monomers as long as it can be copolymerized with styrene. Examples of the polar comonomer containing a carbon-to-carbon double bond may be represented by the comonomer of formula (1) 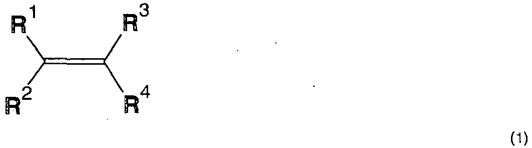 wherein R¹ stands for H or for an alkyl having 1 to 3 C-atoms,
wherein R² stands for H or for a carboxylic acid
wherein R³ stands for H or for an optionally substituted alkyl having 1 to 6 C-atoms
wherein R⁴ stands for a polar group selected from the group consisting of a carboxylic acid group (COOH), a carboxylic acid amide group connected via the C-atom (C(O)NH₂), a carboxylic acid amide group connected via the N-atom (NHC(O)H), an N-pyrrolidinone group (structure), a pyridine group(structure), a carboxylic acid alkyl ester group having 2 to 4 C-atoms substituted with a polar group R⁷, wherein R⁷ stands for a hydroxyl group (OH), an amine group (NH₂) or for a carboxylic acid group (COOH) and an ether group having 1 to 3 C-atoms substituted with a polar group R⁸, wherein R⁸ stands for a hydroxyl group (OH), a primary, secondary or a tertiary amine group (NR⁵R⁶, wherein R⁵ and R⁶) or for a carboxylic acid group (COOH) and
wherein R² and R⁴ may form a ring together with the C-atoms to which they are bound and wherein R³ and R⁴ may form a ring together with the C-atoms to which they are bound.

R¹ preferably stands for H or methyl.

R² preferably stands for H.

R³ may stand for an optionally substituted alkyl having 1 to 6 C-atoms, preferably for H, methyl, ethyl or i-propyl. Substituents include polar groups, such as for example a carboxylic acid group (COOH), an amine group (NH₂), an amide group (C(O)NH₂) and a hydroxyl group (OH).

R⁴ may stand for a carboxylic acid alkyl ester having 2 to 4 C-atoms substituted with a polar group R⁷, wherein R⁷ stands for a hydroxyl group (OH), an amine group (NH₂), a carboxylic acid group (COOH), for example for a carboxylic acid methyl ester or for a carboxylic acid ethyl ester.

R² and R⁴ may form a ring together with the C-atoms to which they are bound; for example a ring containing a heteroatom, for example N or O.

R³ and R⁴ may form a ring together with the C-atoms to which they are bound, for example a ring containing a heteroatom, for example N or O.

Examples of the polar comonomer of formula (1) include but are not limited to acrylic acid (R¹, R² and R³ stand for H and R⁴ stands for a carboxylic acid group), methacrylic acid (R¹and R² stand for H, R³ stands for methyl and R⁴ stands for a carboxylic acid group), propyl acrylic acid (R¹and R² stand for H, R³ stands for i-propyl and R⁴ stands for a carboxylic acid group), maleic acid or citraconic acid (R¹ and R³ stand for a carboxylic acid group and R² and R⁴ stand for H), itaconic acid (R¹ and R² stand for H, R³ stands for methyl substituted with a carboxylic acid group and R⁴ stands for a carboxylic acid group), measconic acid (R¹ stands for methyl, R² stands for a carboxylic acid group, R³ stands for H and R⁴ stands for a carboxylic acid group), acrylamide (R¹, R² and R³ stand for H and R⁴ stands for an amide group connected via the C-atom), methacrylic amide (R¹ and R² stand for H, R³ stands for methyl and R⁴ stands for an amide group connected via the C-atom), vinylpyrollidinone (R¹, R² and R³ stand for H and R⁴ stands for pyrollidinone), N-vinylformamide (R¹, R² and R³ stand for H and R⁴ stands for an amide group connected via the N atom), vinylpyridine (R¹, R² and R³ stand for H and R⁴ stands for pyridine), 2-hydroxy ethylacrylate (R¹, R² and R³ stand for H and R⁴ stands for the ethylester of carboxylic acid substituted with a hydroxyl group), 2-hydroxyethylmethacrylate (R¹and R² stand for H and R³ stands for methyl and R⁴ stands for the ethylester of carboxylic acid substituted with a hydroxyl group), 2-hydroxyethylvinylether (R¹, R² and R³ stand for H and R⁴ stands for an ethylether substituted with a hydroxyl group), 2-aminoethylacrylate (R¹, R² and R³ stand for H and R⁴ stands for the ethylester of carboxylic acid substituted with an amine group), 2-aminoethylvinylether (R¹, R² and R³ stand for H and R⁴ stands for ethylether substituted with an amine group), citraconic acid anhydride (R¹ stands for methyl, R² and R⁴ form a ring together with the carbon atoms to which they are bound and the ring contains an O-atom and R³ stands for H), itaconic acid anhydride and maleic acid anhydride (R¹ and R³ stand for H and R² and R⁴ form a ring together with the carbon atoms to which they are bound and the ring contains an O-atom).

The amount of the polar comonomer with respect to styrene influences the water droplet distribution, as well as the degree of the emulsification of water in the prepolymer composition.

In the cases where the polar comonomer is 2-hydroxyethyl methacrylate, the weight ratio of styrene and the polar comonomer in the monomer composition is preferably between 99:1 to 70:30, more preferably 95:5 to 85:15.

In the cases where the polar comonomer is methacrylic acid, the weight ratio of styrene and methacrylic acid in the starting composition is preferably between 99:1 to 90:10, more preferably 98:2 to 94:6. Particularly preferred is where the polar comonomer is methacrylic acid. The further addition of the MAA was found to result in the increase of the glass transition temperature. The Tg transition also remains narrow.

In the cases where the polar comonomer is acrylic acid, the weight ratio of styrene and acrylic acid in the starting composition is preferably between 99:1 to 90:10, preferably 98:2 to 94:6.

In the cases where the polar comonomer is maleinic anhydride, the weight ratio of styrene and maleinic anhydride in the starting composition is preferably between 99:1 to 70:30, more preferably 90:10 to 75:25.

The starting composition may further comprise polystyrene. The weight ratio of styrene and polystyrene in the starting composition is preferably between 1-20 wt%, more prefereblay 5-15 wt% of the total weight of styrene, the PPE resin, polystyrene and any polar comonomer. Any polystyrene may be used, including a non-recycled polystyrene homopolymer, a recycled polystyrene, polystyrene produced as a waste during the production of expandable polystyrene beads. Use of polystyrene produced as a waste during the production of expandable polystyrene beads is especially advantageous in that the waste can be used.

The amount of the nanoclay is preferably 0.1-15 wt% with respect to the total weight of the monomers and any polymer in the starting composition, more preferably 0.1-5 wt%, more preferably 0.1-1.0 wt%, more preferably 0.3-1.0 wt%. Even more preferably, the amount of the nanoclay is 0.5-1.0 wt%. This range of nanoclay results in a particularly improved water uptake.

### Step a)

An emulsifier-free starting composition used in the process of the present invention is provided in step a). The starting composition comprises styrene and a PPE resin. The starting composition may further comprise a polar comonomer which results in a copolymer of styrene and the polar comonomer. The starting composition may further comprise polystyrene. The starting composition may further comprise a polymerization initiator and a cross-linking agent. It is noted that a combination of more than one initiators or a combination of more than one cross-linking agents may also be used. The starting composition does not contain an emulsifier, i.e. the starting composition is an emulsifier-free composition.

Suitably, the cross-linking agent is selected from the group of compounds having at least two olefinic double bonds. Examples of such compounds include divinylbenzene (or a mixture of its isomers), α, ω)-alkadienes, e.g. isoprene, the diester of acrylic acid or methacrylic acid with a diol, such as ethylene glycol, butanediol, pentanediol or hexanediol. Preferred for its compatibility with styrene is divinylbenzene (or mixture of its isomers).

In order to obtain a significant cross-linking effect, the amount of the cross-linking agent should not be too low. On the other hand, if the amount of cross-linking agent would be too high, the expandability of the eventual particles would be deteriorated. A suitable range is from 0.01 to 5% wt, preferably from 0.01 to 1.5% wt, more preferably 0.01 to 0.5 wt%, based on the weighed amount of monomers. Most preferably from 0.01 to 0.1% wt of cross-linking agent is used.

It was surprisingly found that the cross linking agent improves the mechanical properties of the expanded beads resulting from the WEPS of the present invention. After the beads are compressed and the pressure is released, the increase of the thickness (resilience) was found to be larger than the beads in which no cross-linking agent was used.

The polymerization initiator can be selected from the conventional initiators for free-radical styrene polymerization. They include in particular organic peroxy compounds, such as peroxides, peroxycarbonates and peresters. Combinations of peroxy compounds can also be used. Typical examples of the suitable peroxy initiators are C6 - C20 acyl peroxides such as decanoyl peroxide, benzoyl peroxide, octanoyl peroxide, stearyl peroxide, 3,5,5-trimethyl hexanoyl peroxide, peresters of C2 -C18 acids and C1 - C5 alkyl groups, such as t-butylperbenzoate, t-butylperacetate, t-butyl-perpivalate, t-butylperisobutyrate and t-butyl-peroxylaurate, and hydroperoxides and dihydrocarbyl (C3 - C10) peroxides, such as diisopropylbenzene hydroperoxide, di-t-butyl peroxide, dicumyl peroxide or combinations thereof.

Radical initiators different from peroxy compounds are not excluded. A suitable example of such a compound is α,α'-azobisisobutyronitrile. The amount of radical initiator is suitably from 0.01 to 1 % wt, based on the weight of the monomers.

The monomer composition may further contain other additives in effective amounts. Such additives include chain transfer agents, dyes, fillers, flame retarding compounds, nucleating agents, antistatic compounds and lubricants.

### Step b)

The starting composition is subjected to a prepolymerization step to obtain a mixture of the components of the starting composition and a polymer or a copolymer polymerized from the monomers in the starting composition. The starting composition may be added to a reactor, e.g. a double-walled reactor equipped with motorized stirrer, reflux cooler, temperature sensor and nitrogen inlet.

The reactor may be purged with a nitrogen flow of e.g. 0.5 L/min during the whole reaction. The stirring speed is set to an appropriate speed, e.g. at 300 rpm.

The starting composition is heated to the reaction temperature to obtain a prepolymer composition. The reaction temperature is chosen to be in the range of 80 to 91 °C. More preferably, the reaction temperature is chosen to be in the range of 85 to 91 °C, even more preferably 89 to 91 °C. In the cases where azo type initiators are used, the reaction temperature may be chosen to be lower than 80 °C, e.g. 70-80 °C. The reaction temperature is chosen to control the reaction rate to an appropriate level. When the temperature is too low, the reaction the overall reaction rate is too low. Similarly, when the temperature is too high, the overall reaction rate becomes too high. Especially in the cases where the polar comonomer is acrylic acid, an increased reaction rate was observed which becomes more difficult to control.

When the temperature reaches the reaction temperature, the reaction mixture is subsequently held at the reaction temperature for 30-120 minutes. Preferably, the reaction time is 45-90 minutes, more preferably 70-90 minutes.

Particularly preferred is heating at a temperature of 85-91 °C for 70-90 minutes, more preferably from 70-80 min.

The degree of conversion of the prepolymer composition to which the nanoclay dispersion is added is preferably 20 to 55 %, more preferably 20 to 35%, based on the monomers. The degree of conversion can be determined by evaporating the volatile monomers from a sample of the reaction mixture of a known weight and measuring the residual weight of the non-volatile polymer. The weight of the polymer made from the added monomers can be determined taking into account the initially weighed amount of PPE or PS homopolymer. The sample may be dried e.g. at 60 °C for at least 24 hours under vacuum to remove the volatile monomer fraction.

### Step c)

The nanoclay is mixed with the prepolymer composition as an aqueous dispersion. The aqueous dispersion of the nanoclay may be obtained by a combination of high shear mixing and ultrasonification. For example, the water containing the nanoclay is subjected to a high shear mixing of 15000-20000 rpm for 30 minutes followed by ultrasonification of 750 W for 30 minutes. It will be appreciated that suitable rates and time depend on the type and the size of high shear mixer to a large degree. These steps may be performed at room temperature. These steps may be repeated until a homogeneous nanoclay/water mixtureis obtained.

Step c) results in an inverse emulsion of nanoclay/water in the prepolymer composition, i.e. droplets of a mixture of nanoclay and water are dispersed in the prepolymer composition. The inverse emulsion is kept isothermally for some time, e.g. 20-40 min at or close to the reaction temperature, e.g. at 90 °C.

### Step d)

The inverse emulsion obtained by step c) is suspended in an aqueous medium. The aqueous medium may be added to the inverse emulsion while stirring. The aqueous medium may contain a suspension stabilizer. Any conventional suspension stabilizer may be used, such as polyvinylalcohol, gelatine, polyethyleneglycol, hydroxyethylcellulose, carboxymethylcellulose, polyvinylpyrrolidone, polyacrylamide, but also salts of poly(meth)acrylic acid, phosphonic acid or (pyro)phosphoric acid, maleic acid, ethylene diamine tetracetic acid, and the like, as will be appreciated by the person skilled in the art. Suitable salts include the ammonium, alkali metal and alkaline earth metal salts. An advantageous example of such a salt is tricalcium phosphate. Preferably, the stabilizing agent is based on polyvinylalcohol. The amount of the stabilizing agents may suitably vary from 0.05 to 1.2, preferably from 0.15 to 0.8% wt, based on the weight of suspension water. The volume ratio between the aqueous medium and the prepolymer composition may vary between wide ranges, as will be appreciated by a person skilled in the art. Suitable volume ratios include 1:1 to 1:10 (prepolymer composition : aqueous suspension). The optimal ratio is determined by economic considerations.

Preferably, the aqueous medium has a temperature close to the inverse emulsion. This avoids the temperature decrease of the inverse emulsion.

### Step e)

The prepolymer mixture which is suspended in water containing suspension stabilizer as described in step d) is subjected to suspension polymerization. The temperature of this polymerization step varies with reaction time, but is typically between 90-130 °C. The temperature is preferably at least as high as the prepolymerization step b). The suspension polymerization is preferably performed for a period of 250-320 min, more preferably 270-280 min. When this step is performed at a higher pressure, the temperature may be higher. For example, at a pressure of 4 bars, the step may be performed at a temperature of up to 125-130 °C. The polymerization is preferably performed in this case for a period of up to 410 minutes, preferably for a period of 180-300 minutes, preferably from 200-280 minutes.

It was advantageously found that steps a)-e) can be performed in the same reactor. This provides a simple process compared e.g. to the processes in which the prepolymerization step and the polymerization step are performed in different reactors. The reactor may be a glass reactor where one can look inside, or a pressurized reactor made of e.g. a stainless steel.

The expandable polymer beads may be further coated with a coating composition for reducing the tendency of the particles to agglomerate and/or suppressing the diffusion of water out of the beads. Examples of such coating compositions are compositions containing glycerol- or metal carboxylates. Such compounds reduce the tendency of the particles to agglomerate. Suitable carboxylates are glycerol mono-, diand/or tristearate and zinc stearate. Examples for such additive composition are disclosed in GB-A-1,409,285. Particularly useful coating composition comprises wax, especially paraffin wax. The coating composition are deposited onto the particles via known methods e.g. via dry-coating in a ribbon blender or via a slurry or solution in a readily vaporizing liquid.

The present invention also relates to water expandable polymer beads obtainable by the present invention.

The present invention also relates to water expandable polymer beads comprising polystyrene, polyphenylene ether resin (PPE) and a modifier-free nanoclay. The polymer beads may further comprise a copolymer of styrene and a polar comonomercontaining a carbon-to-carbon double bond. The polar comonomer containing a carbon-to-carbon double bond may be any of the ones as described above. In the cases where the polar comonomer is 2-hydroxyethyl methacrylate, the weight ratio of styrene and the polar comonomer in the monomer composition is preferably between 99:1 to 70:30, more preferably 95:5 to 85:15. In the cases where the polar comonomer is methacrylic acid, the weight ratio of styrene and methacrylic acid in the starting composition is preferably between 99:1 to 90:10, more preferably 98:2 to 94:6. In the cases where the polar comonomer is acrylic acid, the weight ratio of styrene and acrylic acid in the starting composition is preferably between 99:1 to 90:10, preferably 98:2 to 94:6. In the cases where the polar comonomer is maleinic anhydride, the weight ratio of styrene and maleinic anhydride in the starting composition is preferably between 99:1 to 70:30, more preferably 90:10 to 75:25.

The water expandable polymer beads according to the present invention preferably have an average diameter of 0.1 to 3 mm, preferably from 0.4 to 1.2 mm.

The expandable particles can be pre-foamed by hot air or by using (superheated) steam, to yield expanded or pre-expanded particles. Such particles have a reduced density, e.g. from 800 to 30 kg/m³. It will be appreciated that in order to vaporize the water included in the particles to effect foaming, the temperature must be higher than used for C3 -C6 hydrocarbon foaming agents which have a lower boiling point than water. Foaming can also be effected by heating in oil, hot air or by microwaves.

Therefore, the present invention also relates to expanded polymer beads obtainable by expanding the water expandable polymer beads according to the present invention.

It is noted that the term 'comprising' does not exclude the presence of other elements. However, it is also to be understood that a description on a product comprising certain components also discloses a product consisting of these components. By way of example, when an emulsifier-free starting composition comprising styrene, a PPE resin and a nanoclay is referred, it is understood that both a composition consisting of styrene, a PPE resin and a nanoclay and a composition consisting of styrene, a PPE resin, a nanoclay and optional components such as a polymerization initiator and a cross-linking agent (but not comprising an emulsifier) are referred.

The invention will be further illustrated by means of the following examples.
Fig.1(a) shows a SEM image of an example of the expandable PS bead according to Comp. Ex. B;
Fig.1 (b) shows a SEM image of an example of the expandable bead prepared according to Ex. 4 of the present invention;
Fig.1 (c) shows a SEM image of an example of the expandable bead prepared according to Ex. 6 of the present invention;
Fig.1 (d) shows a SEM image of an example of the expandable bead prepared according to Ex. 9 of the present invention and
Fig. 2 shows a SEM image of an example of the expanded PS beads prepared according to Ex. 9 of the present invention.

### Experiments

The monomers styrene (Sty), methacrylic acid (MAA) and 2-hydroxyethyl methacrylate (HEMA) were obtained from Aldrich and used as received. The suspension stabilizer Mowiol 40-88 (average Mw = 127 kg/mol) was provided by Aldrich. Nanoclay was Nanocor PGV from Nanocor. Nanocor PGV has an aspect ratio of 150-200 and a maximum moisture uptake of 18 wt%. Poly(2,6-dimethyl-1,4-phenylene ether) was provided by SABIC-BoZ, The Netherlands.

Table 1 shows an overview of the composition feeds used in the experiments.

**Table 1. Overview of experiments**

| Ex. | Abbreviation | Composition feed prepolymerization | | | | Nanoclay dispersion | |
|---|---|---|---|---|---|---|---|
| | | Sty [wt%] | HEMA or MAA [wt%] | PPE [wt%] | PS [wt%] | nano clay [wt%] | water [wt%] |
| 1 | PS95%_5%PPE_0.5%PGV | 95 | 0 | 5 | 0 | 0.5 | 8.3 |
| 2 | PS90%_10%PPE_0.5%PGV | 90 | 0 | 10 | 0 | 0.5 | 8.3 |
| 3 | PS85_15%PPE_0.5%PGV | 85 | 0 | 15 | 0 | 0.5 | 8.3 |
| 4 | PS95%_5%PPE_1.0%PGV | 95 | 0 | 5 | 0 | 1 | 16.6 |
| 5 | PS90%_10%PPE_1.0%PGV | 90 | 0 | 10 | 0 | 1 | 16.6 |
| 6 | PS85_15%PPE_1.0%PGV | 85 | 0 | 15 | 0 | 1 | 16.6 |
| 7 | PSPHEMA85/10_5%PPE_1. 0%PGV | 85 | 10 | 5 | 0 | 1 | 16.6 |
| 8 | PSPMAA87.5/2.5_10%PPE_ 0.5%PGV | 87.5 | 2.5 | 10 | 0 | 0.5 | 8.3 |
| 9 | PS80_10%PS_10%PPE_0.5 %PGV | 80 | 0 | 10 | 10 | 0.5 | 8.3 |
| Comp. A | PS100_0.5%PGV | 100 | 0 | 0 | 0 | 0.5 | 8.3 |
| Comp. B | PS100_1.0%PGV | 100 | 0 | 0 | 0 | 1 | 16.6 |

The synthesized polymer beads (sometimes referred herein as WEPS beads) are abbreviated as PS for polystyrene, and PSPHEMA for copolymers prepared from Sty/HEMA mixtures and PSPMAA for copolymers prepared from Sty/MAA mixtures. The weight percentage of PPE, PS and PGV is included in the abbreviation. For example, a PSPHEMA85/10_5%PPE_0.5%PGV copolymer is prepared from a starting composition consisting of 85 wt% Sty and 10 wt% HEMA and 5% PPE (and any additives). A dispersion of nanoclay (0.5 wt% of the total of styrene, HEMA and PPE) in water is added to the prepolymer mixture during the reaction.

The amount of PGV nanoclay varied between 0.5-1.0 wt% based on the total weight of the monomer and polymers in the starting composition.

### General recipe for WEPS beads containing endcapped PPE on 100 grams scale

A general recipe for the synthesis of WEPS batches on 100 g scale is summarized in table 2. For all reactions, the ratio of reaction mixture/suspension water was equal to 1/2. For the PS80_10%PS_10%PPE_0.5%PGV (Ex. 9) batch, the calculated quantities are listed in the third column of table 2. Table 3 shows the different synthesis steps that were used to prepare WEPS beads containing endcapped PPE. Table 4 summarizes the procedure that was used to disperse PGV nanoclay in water.

**Table 2: Recipe for the synthesis of WEPS beads based on PS/PPE blends (100 g scale)**

| **Reactant** | **General quantities** | **Specific quantity** PS80_10%PS_10%PPE_0. 5%PGV (100 g in total = monomer + PPE+PS) |
|---|---|---|
| **1)** Styrene (Sty) | q wt% | 80 g (q = 80 wt%) |
| **2)** 2-hydroxyethyl methacrylate (HEMA) | x wt% | 0 g (x = 0 wt%) |
| **3)** Endcapped PPE (Noryl 855A) | y wt% | 10 g (y = 10 wt%) |
| **4)** PS* homopolymer (Aldrich: M_{w} = 192 kg/mole) | z wt% | 10 g (z = 10 wt%) |
| **5)** Initiator: | | |
| **a)** Dibenzoylperoxide (DBPO) | 0.40-0.45 wt% (of monomer weight) | 360 mg (0.45 wt%) |
| **b)** t-butylperoxybenzoate (TBPB) | 0.09-0.11 wt% (of monomer weight) | 90 mg (0.11 wt%) |
| **6)** Cross-linking agent: divinylbenzene (DVB) | 0.00-0.09 wt% (of monomer weight) | 72 mg (0.09 wt%) |
| **7)** Nanoclay/water mixture:¹ | 0.375-0.63 % (of total weight) | 0.5 g (0.5 %) |
| **a)** Montmorillonite nanoclay (Nanocor PGV or Nanofil116 nanoclay) | 5-10 % (of total weight) | 8.3 g (8.3 %) |
| **b)** Water (inverse emulsion) | | |
| **8)** Water (suspension) | 2 times total weight | 200 g |
| **9)** Suspension stabilizer Poly(vinyl alcohol): Mowiol 40-88 | 0.4 wt% (of total weight suspension water) | 0.8 g (0.4 wt%) |

| | | |
|---|---|---|
| ¹⁾ For PS80_10%PS*_10%PPE_0.5%PGV (Ex. 9), 3 g of PGV was homogenized in 50 g water using a combination of high-shear mixing (IKA Ultra-Turrax T8) and ultrasonification (Sonics Vibra Cell) (see procedure in table 4). From this homogenized mixture, approximately 9 g (theoretically consisting of 8.3 g H₂O and 0.5 g PGV) was weighed and added to the prepolymerization mixture under rapid stirring. | | |

**Table 3: Synthesis steps used in the preparation of WEPS beads based on PS/PPE blends**

| **Step^{2,3}** | **Temperature [°C]** | **Stirring speed [rpm]** | **Time [min]¹** |
|---|---|---|---|
| **A:** Disperse 7a in 7b | 20 | See table 4 | See table 4 |
| **B:** Dissolve 2, 3, 4, 5 and 6 in 1 (R1)² | 50 | 250 | Approximately 60 min needed for dissolving PPE and PS in Sty |
| **C:** Heat reaction mixture (R1) | to 89 | 250-350 | 20-30 |
| **D:** Isothermal period (R1) | 89 | 250-350 | 40 (t_{R} = 40) |
| **E:** Add (7a+7b) to R1 | 83-85 (temporary drop in temperature) | 450-600 | < 1 (t_{R} = 40) |
| **F:** Heating/isothermal period (R1) | 89 | 450-600 | 30 (t_{R} = 70) |
| **G:** Dissolve 9 in 8 (R2) | 80-90 | 300 | 45-60 min needed for dissolving Mowiol 40-88 |
| **H:** Transfer prepolymerization mixture from R1 to R2 | 80-85 (slight drop in temperature) | 0 | ≈ 10 (t_{R} = 80 min) |
| **I:** Heat reaction mixture (R2) | to 90 | 400-500 | 15-20 (t_{R} = 95-100) |
| **J:** Isothermal period (R2) | 90 | 400-500 | 150 (t_{R} = 245-250) |
| **K:** Heat reaction mixture (R2) | to 120 | 400-500 | 60 (t_{R} = 305-310) |
| **L:** Isothermal period (R2) | 120 | 400-500 | 30 (t_{R} = 335-340) |
| **M:** Heat reaction mixture (R2) | to 130 | 400-500 | 15 (t_{R} = 350-355) |
| **N:** Isothermal period (R2) | 130 | 400-500 | 15 (t_{R} = 365-370) |
| **O:** Cooling down (R2) | to 40 | 300 | 20 (t_{R} = 385-390) |

| | | | |
|---|---|---|---|
| ¹⁾ t_{R} is the cumulative reaction time which starts at step D (t_{R} = 0). When step D is finished, t_{R} will be 40 min. ²⁾ Reactor 1 is made of glass and is denoted as R1. R1 has a volume of 300 ml and can be used at atmospheric pressure only. ³⁾ Reactor 2 is made of stainless steel by Premex Reactor AG Switzerland and is denoted as R2. R2 has a volume of 300 ml and is used at pressures up to 4.6 bar. Batches of 100 grams WEPS beads were prepared in this reactor. | | | |

**Table 4: General procedure for dispersing montmorillonite nanoclay in water**

| **Step** | **Time [min]** | **Settings** |
|---|---|---|
| 1) Ultrasonification | 30 | 750 W |
| 2) High shear mixing | 20 | 15000-20000 rpm |
| 3) Ultrasonification | 30 | 750 W |
| 4) High shear mixing | 20 | 15000-20000 rpm |
| 5) Ultrasonification | 30 | 750 W |
| 6) High shear mixing | 20 | 15000-20000 rpm |

### Synthesis procedure for WEPS based on PS/PPE blend on 100 grams scale

In this paragraph, the recipe to prepare PS80_10%PS_10%PPE_0.5%PGV (Ex. 9) is described in detail.

### Preparation of sodium montmorillonite nanoclay/water mixture

3.0 g PGV nanoclay (Nanocor PGV from Nanocor) was dispersed in 50 g water using an ultrasonic probe (Sonics Vibra Cell) and a high shear mixer (IKA Ultra-Turrax T8) (step A). The dispersing procedure is summarized in table 4. There is an optimal ratio between sodium montmorillonite nanoclay/water. When the ratio nanoclay/water is low, the final water content in the produced WEPS beads may be too low because the water will not stay in the apolar PS matrix. When the ratio nanoclay/water is high, the nanoclay/water mixture may become too viscous and thus prohibiting a homogeneous dispersion in the apolar PS matrix.

### Pre-polymerization procedure

Subsequently, 10 g endcapped PPE (Noryl 855A), 10 g PS homopolymer (Aldrich), initiators DPBO, TBPB, cross-linking agent DVB and 80 g Sty were quantitatively added to reactor R1 (see table 3) (step **B),** equipped with motorized stirrer, reflux cooler, temperature sensor and nitrogen inlet. The reactor was continuously purged with a nitrogen flow of 0.3 L/min. The stirring speed was set at 250 rpm and the temperature at 50 °C. After approximately 1 h, all PPE/PS* homopolymer was dissolved in Sty and a homogeneous viscous mixture was obtained.
After complete dissolution, the reaction temperature was set at 89 °C (step **C).** The reaction time t_{R} started when the temperature of the reaction mixture reached 89 °C (step **D).** The reaction mixture was subsequently held at 89 °C until t_{R} = 40 min. At t_{R} = 40 min, the stirring was stopped and the PGV nanoclay/water mixture (0.5 g PGV + 8.3g water) of ambient temperature was slowly added to the viscous monomer/polymer reaction mixture (step **E).** Subsequently, the stirring was set at 450 rpm. Due to the addition of water, the temperature of the bulk reaction mixture dropped to 83 °C. The stirring was continued for 30 min whereas the temperature increased to 89 °C (step **F).**

### Suspension polymerization of PPE/Sty mixture

Prior to the suspension polymerization, 0.8 g poly(vinyl alcohol) (Mowiol 40-88) was added to 200 g water in R2 and this mixture was subsequently heated to 90 °C (step **G).** At t_{R} = 70 min, the stirring in R1 was stopped and the prepolymerization mixture was rapidly transferred to R2, already containing 0.8 g poly(vinyl alcohol) (Mowiol 40-88) dissolved in 200 g water (step **H).** The reaction temperature was then set at 90 °C whereas the reaction mixture was rapidly stirred at 500 rpm to obtain a homogeneous dispersion of small PS/PPE droplets in the continuous water phase (step I). The reaction temperature of 90 °C was reached after approximately 15 min and kept isothermal for 150 min (step **J).** The reaction was subsequently stepwise heated over a period of 60 minutes to a temperature of 120 °C (step **K)** and kept at this temperature for 30 min (step L). The temperature was then further increased to 130 °C over a period of 15 min (step M) and held isothermal for 15 minutes (step **N).** At t_{R} = 410 min, the reaction was cooled to approximately 40 °C and the pressure was released (step **O**). The beads were collected by filtering the reaction product over a polyester sieve cloth with a mesh size of 80 µm and were thoroughly rinsed with water. The sieve cloth was dried on the outside with tissue paper to remove the excess of water present between the beads. The sieve cloth with the beads inside was subsequently placed in a centrifuge for approximately 10 minutes to remove the excess of water.

### Drying procedure of WEPS beads in a packed bed reactor.

The beads were subsequently taken from the polyester sieve cloth and placed in a packed bed reactor. This reactor consists of a glass tube (inner diameter = 30 mm) with a bottom that was made of sintered glass. A small heat exchange glass coil (inner diameter = 5 mm) surrounded the glass tube and entered the tube at the bottom just below the sintered glass plate. The tube was filled with 55 g WEPS beads. Subsequently, 25 g glass pearls with a diameter of 2 mm were placed on top of the WEPS beads to be sure that the beads stayed in place. The tube was placed in a thermostatic water bath of 30 °C. After 5 minutes, when the temperature of the glass reactor and its contents were also around 30 °C, a dry nitrogen flow of 5 l/min was purged via the outer coil which enters the bottom of the tube, through the WEPS beads. Already after few minutes, moisture condensated on top of the cold reactor outlet. After approximately 30 min, no moisture was visible anymore. After 60 min, the nitrogen flow was stopped and the reactor was removed from the water bath.

### Sieving procedure of dried WEPS beads

The WEPS beads were removed from the reactor and added to an array of sieves: 1.7 mm, 1.18 mm, 800 µm, 600 µm, 400 µm. After a shaking period of 10 minutes, the different cuts were collected and put into vials.

### Examples 1-8

Examples 1-8 have been performed in the same manner as Example 9, except that the parameters were varied as summarized in Table 1.

### Comp. Ex. A-B

Comp. Ex. A-B were performed in the same way as example 9, except that the parameters have been varied as summarized in Table 1. No PPE was used in Comp. Ex. A-B. Furthermore, the pre-polymerization procedure was different from the prepolymerization procedure as described above in the following: The PGV nanoclay/water mixture was added to the reaction mixture at t_{R} = 90 min instead of t_{R} = 40 min, while stirring at 600 rpm (step **E).** The stirring was continued for 20 minutes. At t_{R} = 110 min, the stirring rate was reduced to 500 rpm (step **F).**

### Results

### Differential scanning calorimetry (DSC)

The samples were dried for 24 h in an oven under vacuum at 60 °C to remove the entrapped water inside the beads. For DSC measurements, the temperature was varied between -50 and 150 °C using heating and cooling rates of 10 °C/min and isothermal periods of 2 min at -50 and 150 °C, respectively. Only the second DSC heating run was evaluated.

The results are summarized in Table 5.

**Table 5**

| **Ex.** | **Sample name** | **DSC heating run 2** |
|---|---|---|
| | | **T_{g} [°C]** |
| 1 | PS95%_5%PPE_0.5%PGV | 108 |
| 2 | PS90%_10%PPE_0.5%PGV | 111 |
| 3 | PS85_15%PPE_0.5%PGV | 115 |
| 4 | PS95%_5%PPE_1.0%PGV | 109 |
| 5 | PS90%_10%PPE_1.0%PGV | 112 |
| 6 | PS85_15%PPE_1.0%PGV | 116 |
| 7 | PSPHEMA85/10_5%PPE_1.0%PGV | 104 (broad Tg) |
| 8 | PSPMAA87.5/2.5_10%PPE_0.5%PGV | 116 |
| 9 | PS80_10%PS_10%PPE_0.5%PGV | 111 |
| Comp.A | PS100_0.5%PGV | 105 |
| Comp.B | PS100_1.0%PGV | 104 |
| - | PPE | 184 |

The Tg of the PPE used in the present invention is included in the table for reference. Table 5 shows that the addition of PPE results in increase of the Tg. Increase in the amount of PPE resulted in a further increase of the Tg.

The derivative of the heat flow was compared. Comp. Ex. A-B showed that polystyrene prepared without PPE has a narrow Tg transition (narrow peak observed in the derivative heat flow signal). The increase in the amount of PPE was found to slightly broaden the Tg peak, but this did not have a significant effect on the foam density, i.e. the density of the beads was successfully lowered by the addition of the PPE resin, as described later in the description.

The addition of the comonomer HEMA resulted in broadening of the Tg peak. The addition of the comonomer MAA resulted in anincrease of the Tg but did show a broadening effect of the derivative heat flow signal.

The addition of polymer PS in the starting composition was found to result in a narrow Tg transition.

An increase in the amount of the nanoclay was found not to have a large effect on the Tg and the width of the Tg transition.

### Karl Fischer (KF) titration

The amount of water inside the synthesized beads was determined by Karl Fischer titration.

The amount of water entrapped inside the beads is determined by the amount of Na+MMT/water that is added. Addition of PPE has significant influence on the water droplet distribution inside the beads (see SEM images) but does not have significant influence on the water uptake. What is important is that water is a requisite to obtain a foam i.e. without water, no foaming will occur.

### Morphology before and after foaming

### Unfoamed beads

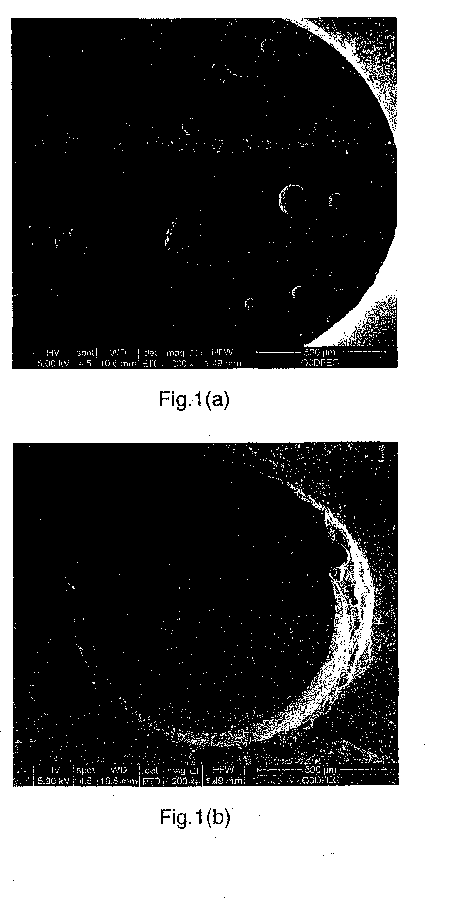

SEM was used to study the morphology of the synthesized beads. Therefore, a cross section of a bead was prepared by cutting off slices with a rotation microtome and the surface was subsequently sputtered with gold. Cross sections of unfoamed beads from different batches are shown in Figures 1 (a)-(d). Figure 1(a) shows a bead from the Comp. Ex. B(PS100_1.0%PGV) batch. Large holes can be seen all over the surface of the cross-section. These holes originate from water droplets which are entrapped inside the bead. It can be seen that the holes are not randomly distributed over the surface. This result is most likely due to an inhomogeneous distribution of the PGV nanoclay/water mixture that was added to the PS/Sty mixture during the prepolymerization step. This morphology will result in poor foamability as was verified by measurements of the density. From this result it can be concluded that additional emulsifiers such as AOT are necessary to improve the distribution of the PGV nanoclay/water mixture in the PS/Sty mixture. However, emulsifiers such as AOT destabilize the suspension stability.

Figure 1(b) shows the cross-section of a PS95_5%PPE_1.0%PGV bead (Ex.4). It can be seen that addition of 5 wt% PPE in combination with PGV nanoclay results in a more random distribution of water droplets compared to the homopolymer PS100_1.0%PGV (Comp. Ex.B) batch. No large holes are visible such as in Fig.1(a) and the hole size is generally smaller than 30 µm.

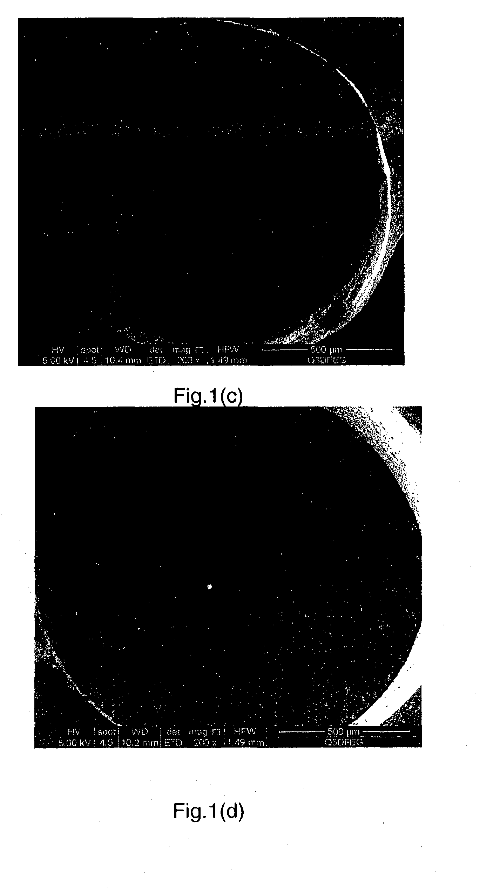

Figure 1(c) shows the cross-section of a PS85_15%PPE_1.0%PGV (Ex.6) batch. It can be observed that the average size of the holes is much smaller compared to the size of the holes in the PS95_5%PPE_1.0%PGV bead with a lower amount of PPE (Figure 1 (b)). This shows that the water droplets entrapped inside the beads, from which the holes originate, were much smaller. Therefore, the increase of the PPE amount results in further decrease of the average water droplet size. Figure 1 (d) shows the cross-section of a PS80_10%PS_10%PPE_0.5%PGV (Ex.9) batch. Again, only small holes are present. The addition of PS also results in a more homogeneous distribution of holes (i.e. water droplets) over the surface of the cross section and decreases the hole size.

### Foaming using superheated steam

Superheated steam was used for the expandability tests of the synthesized WEPS batches. The foaming temperature used for foaming of the WEPS beads was approximately 120-130 °C.

### Foamed beads

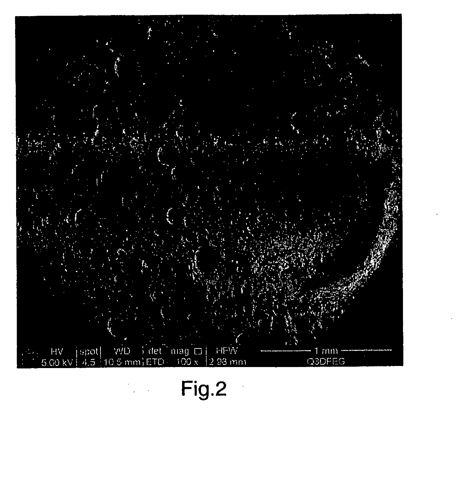

Figure 2 shows the cross section of an expanded WEPS bead of Ex. 9 (PS80_10%PS_10%PPE_0.5%PGV) in which PS and PPE were used. The beads have been successfully expanded. Small cells are present all over the surface of the cross section. Consequently, the original morphology as shown in Figure 1 (d) shows that the criterion to obtain foams with a uniform cell structure is to have WEPS beads with a homogeneous distribution of small water droplets throughout the bead.

For several samples, the density after pre-expansion was measured. The samples made without PPE, i.e. Comp.Ex. A-B showed a very high density of 100-140 kg/m³. In comparison, the samples made according to the present invention showed a low density of generally 45-65 kg/m³. These results correspond to the predictions made with SEM observations in which the beads with larger pores would not expand well.

Further, DMTA measurements showed favorable storage modulus, loss modulus and Tan delta for the beads made according to the present invention.

## Claims

1. A process for the emulsifier-free preparation of water expandable polymer beads, which process comprises the steps of:
a) providing an emulsifier-free starting composition comprising styrene and a polyphenylene ether resin,
b) prepolymerizing the starting composition to obtain a prepolymer composition,
c) adding an aqueous dispersion of a modifier-free nanoclay to the prepolymer composition to obtain an inverse emulsion,
d) suspending the inverse emulsion obtained by step c) in an aqueous medium to yield an aqueous suspension of suspended droplets and
e) polymerizing the monomers in the droplets of the suspension obtained by step d) to obtain the water expandable polymer beads.

2. The process according to claim 1, wherein the polyphenylene ether resin is poly(2,6-dimethyl-1,4-phenylene) ether.

3. The process according to claim 1 or 2, wherein the weight ratio of styrene and the PPE resin in the starting composition is between 99:1 to 70:30.

4. The process according to any one of the previous claims, wherein the starting composition further comprises polystyrene.

5. The process according to claim 4, wherein the amount of the polystyrene is 1-20 wt% of of the total weight of the monomers and the polymers in the starting composition.

6. The process according to any one of the previous claims, wherein the starting composition further comprises a polar comonomer containing a carbon-to-carbon double bond.

7. The process according to claim 6, wherein the polar comonomer is represented by the comonomer of formula (1) 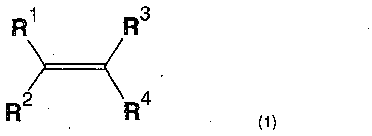 wherein R¹ stands for H or for an alkyl having 1 to 3 C-atoms,
wherein R² stands for H or for a carboxylic acid
wherein R³ stands for H or for an optionally substituted alkyl having 1 to 6 C-atoms wherein R⁴ stands for a polar group selected from the group consisting of a carboxylic acid group (COOH), a carboxylic acid amide group connected via the C-atom (C(O)NH₂), a carboxylic acid amide group connected via the N-atom (NHC(O)H), an N-pyrrolidinone group (structure), a pyridine group(structure), a carboxylic acid alkyl ester group having 2 to 4 C-atoms substituted with a polar group R⁷, wherein R⁷ stands for a hydroxyl group (OH), an amine group (NH₂) or for a carboxylic acid group (COOH) and an ether group having 1 to 3 C-atoms substituted with a polar group R⁸, wherein R⁸ stands for a hydroxyl group (OH), a primary, secondary or a tertiary amine group (NR⁵R⁶, wherein R⁵ and R⁶) or for a carboxylic acid group (COOH) and
wherein R² and R⁴ may form a ring together with the C-atoms to which they are bound and wherein R³ and R⁴ may form a ring together with the C-atoms to which they are bound.

8. The process according to claim 7, wherein the polar comonomer is selected from the group consisting of: acrylic acid (R¹, R² and R³ stand for H and R⁴ stands for a carboxylic acid group), methacrylic acid (R¹and R² stand for H, R³ stands for methyl and R⁴ stands for a carboxylic acid group), propyl acrylic acid (R¹and R² stand for H, R³ stands for i-propyl and R⁴ stands for a carboxylic acid group), maleic acid or citraconic acid (R¹ and R³ stand for a carboxylic acid group and R² and R⁴ stand for H), itaconic acid (R¹ and R² stand for H, R³ stands for methyl substituted with a carboxylic acid group and R⁴ stands for a carboxylic acid group), measconic acid (R¹ stands for methyl, R² stands for a carboxylic acid group, R³ stands for H and R⁴ stands for a carboxylic acid group), acrylamide (R¹, R² and R³ stand for H and R⁴ stands for an amide group connected via the C-atom), methacrylic amide (R¹ and R² stand for H, R³ stands for methyl and R⁴ stands for an amide group connected via the C-atom), vinylpyrollidinone (R¹, R² and R³ stand for H and R⁴ stands for pyrollidinone), N-vinylformamide (R¹, R² and R³ stand for H and R⁴ stands for an amide group connected via the N atom), vinylpyridine (R¹, R² and R³ stand for H and R⁴ stands for pyridine), 2-hydroxy ethylacrylate (R¹, R² and R³ stand for H and R⁴ stands for the ethylester of carboxylic acid substituted with a hydroxyl group), 2-hydroxyethylmethacrylate (R¹and R² stand for H and R³ stands for methyl and R⁴ stands for the ethylester of carboxylic acid substituted with a hydroxyl group), 2-hydroxyethylvinylether (R¹, R² and R³ stand for H and R⁴ stands for an ethylether substituted with a hydroxyl group), 2-aminoethylacrylate (R¹, R² and R³ stand for H and R⁴ stands for the ethylester of carboxylic acid substituted with an amine group), 2-aminoethylvinylether (R¹, R² and R³ stand for H and R⁴ stands for ethylether substituted with an amine group), citraconic acid anhydride (R¹ stands for methyl, R² and R⁴ form a ring together with the carbon atoms to which they are bound and the ring contains an O-atom and R³ stands for H), itaconic acid anhydride and maleic acid anhydride (R¹ and R³ stand for H and R² and R⁴ form a ring together with the carbon atoms to which they are bound and the ring contains an O-atom).

9. The process according to any one of the previous claims, wherein the modifier-free nanoclay is an unmodified sodium montmorillonite nanoclay and the amount of the nanoclay is 0.1-10 wt%, preferably 0.1-5 wt%, more preferably 0.1-1.0 wt%, more preferably 0.3-1.0 wt%, even more preferably 0.5-1.0 wt% of the total weight of the monomers and the polymers in the starting composition.

10. The process according to any one of the previous claims, wherein step b) involves heating the starting composition at a temperature of 85-91°C for a period of 30-120 minutes, preferably for 70-90 minutes.

11. The process according to any one of the previous claims, wherein the prepolymer composition obtained by step b) has a degree of conversion from the monomers to polymer of 20 to 55%, based on the monomers.

12. The process according to any one of the previous claims, wherein step e) involves heating the suspension obtained by step d) at a temperature of 125-130 °C for a period of 180-300 minutes, preferably from 200-280 minutes.

13. The water expandable polymer beads obtainable by the process according to claims 1-12.

14. Water expandable polymer beads comprising polystyrene and a polyphenylene ether resin and a nanoclay and optionally a copolymer of styrene and a polar comonomer containing a carbon-to-carbon double bond.

15. Expanded polymer beads obtainable by expanding the water expandable polymer beads according to any one of claims 13-14.

## Patentansprüche

1. Verfahren zur emulgatorfreien Herstellung von wasserexpandierbaren Polymerperlen, bei dem man:
a) eine emulgatorfreie Ausgangszusammensetzung, die Styrol und ein Polyphenylenetherharz umfasst, bereitstellt,
b) die Ausgangszusammensetzung prepolymerisiert, wobei man eine Prepolymer-Zusammensetzung erhält,
c) eine wässrige Dispersion eines modifikatorfreien Nanotons zu der Prepolymer-Zusammensetzung gibt, wobei man eine inverse Emulsion erhält,
d) die durch Schritt c) erhaltene inverse Emulsion in einem wässrigen Medium suspendiert, wobei man eine wässrige Suspension von suspendierten Tröpfchen erhält, und
e) die Monomere in den Tröpfchen der durch Schritt
d) erhaltenen Suspension polymerisiert, wobei man die wasserexpandierbaren Polymerperlen erhält.

2. Verfahren nach Anspruch 1, bei dem es sich bei dem Polyphenylenetherharz und Poly(2,6-dimethyl-1,4-phenylen)ether handelt.

3. Verfahren nach Anspruch 1 oder 2, bei dem das Gewichtsverhältnis von Styrol und dem PPE-Harz in der Ausgangszusammensetzung zwischen 99:1 bis 70:30 liegt.

4. Verfahren nach einem der vorhergehenden Ansprüche, bei dem die Ausgangszusammensetzung ferner Polystyrol umfasst.

5. Verfahren nach Anspruch 4, bei dem die Menge des Polystyrols sich auf 1-20 Gew.-% des Gesamtgewichts der Monomere und der Polymere in der Ausgangszusammensetzung beläuft.

6. Verfahren nach einem der vorhergehenden Ansprüche, bei dem die Ausgangszusammensetzung ferner ein polares Comonomer mit einer Kohlenstoff-Kohlenstoff-Doppelbindung umfasst.

7. Verfahren nach Anspruch 6, bei dem das polare Comonomer durch das Comonomer der Formel (1) wiedergegeben wird: 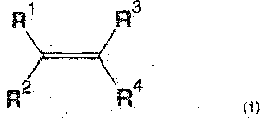 wobei R¹ für H oder für ein Alkyl mit 1 bis 3 C-Atomen steht,
wobei R² für H oder für eine Carbonsäure steht, wobei R³ für H oder für ein gegebenenfalls substituiertes Alkyl mit 1 bis 6 C-Atomen steht, wobei R⁴ für eine polare Gruppe steht, die ausgewählt ist aus einer Carbonsäuregruppe (COOH), einer Carbonsäureamidgruppe, die über das C-Atom gebunden ist (C(O)NH₂), einer Carbonsäureamidgruppe, die über das N-Atom gebunden ist (NHC(O)H), eine N-Pyrrolidongruppe (Struktur), eine Pyridingruppe (Struktur), eine Carbonsäurealkylestergruppe mit 2 bis 4 durch eine polare Gruppe R⁷ substituierten C-Atomen, wobei R⁷ für eine Hydroxylgruppe (OH), eine Amingruppe (NH₂) oder für eine Carbonsäuregruppe (COOH) steht, und einer Ethergruppe mit 1 bis 3 durch eine polare Gruppe R⁸ substituierten C-Atomen, wobei R⁸ für eine Hydroxylgruppe (OH), eine primäre, sekundäre oder tertiäre Amingruppe (NR⁵R⁶, wobei R⁵ und R⁶) oder für eine Carbonsäuregruppe (COOH) steht, und wobei R² und R⁴ zusammen mit den C-Atomen, an die sie gebunden sind, einen Ring bilden können und wobei R³ und R⁴ zusammen mit den C-Atomen, an die sie gebunden sind, einen Ring bilden können.

8. Verfahren nach Anspruch 7, wobei das polare Comonomer aus der Gruppe bestehend aus: Acrylsäure (R¹, R² und R³ stehen für H und R⁴ steht für eine Carbonsäuregruppe), Methacrylsäure (R¹ und R² stehen für H, R³ steht für Methyl und R⁴ steht für eine Carbonsäuregruppe), Propylacrylsäure (R¹ und R² stehen für H, R³ steht für i-Propyl und R⁴ steht für eine Carbonsäuregruppe), Maleinsäure oder Citraconsäure (R¹ und R³ stehen für eine Carbonsäuregruppe und R² und R⁴ stehen für H), Itaconsäure (R¹ und R² stehen für H, R³ steht für Methyl, das durch eine Carbonsäuregruppe substituiert ist, und R⁴ steht für eine Carbonsäuregruppe), Mesaconsäure (R¹ steht für Methyl, R² steht für eine Carbonsäuregruppe, R³ steht für H und R⁴ steht für eine Carbonsäuregruppe), Acrylamid (R¹, R² und R³ stehen für H und R⁴ steht für eine Amidgruppe, die über das C-Atom gebunden ist), Methacrylamid (R¹ und R² stehen für H, R³ steht für Methyl und R⁴ steht für eine Amidgruppe, die über das C-Atom gebunden ist), Vinylpyrrolidinon (R¹, R² und R³ stehen für H und R⁴ steht für Pyrrolidinon), N-Vinylformamid (R¹, R² und R³ stehen für H und R⁴ steht für eine Amidgruppe, die über das N-Atom gebunden ist), Vinylpyridin (R¹, R² und R³ stehen für H und R⁴ steht für Pyridin), 2-Hydroxyethylacrylat (R¹, R² und R³ stehen für H und R⁴ steht für den durch eine Hydroxylgruppe substituierten Carbonsäureethylester), 2-Hydroxyethylmethacrylat (R¹ und R² stehen für H, R³ steht für Methyl und R⁴ steht für den durch eine Hydroxylgruppe substituierten Carbonsäureethylester), 2-Hydroxyethylvinylether (R¹, R² und R³ stehen für H und R⁴ steht für einen durch eine Hydroxylgruppe substituierten Ethylether), 2-Aminoethylacrylat (R¹, R² und R³ stehen für H und R⁴ steht für den durch eine Amingruppe substituierten Carbonsäureethylester), 2-Aminoethylvinylether (R¹, R² und R³ stehen für H und R⁴ steht für durch eine Amingruppe substituierten Ethylether), Citraconsäureanhydrid (R¹ steht für Methyl, R² und R⁴ bilden zusammen mit den Kohlenstoffatomen, an die sie gebunden sind, einen Ring, und der Ring enthält ein O-Atom, und R³ steht für H), Itaconsäureanhydrid und Maleinsäureanhydrid (R¹ und R³ stehen für H und und R² und R⁴ bilden zusammen mit den Kohlenstoffatomen, an die sie gebunden sind, einen Ring, und der Ring enthält ein O-Atom) ausgewählt wird.

9. Verfahren nach einem der vorhergehenden Ansprüche, bei dem es sich bei dem modifikatorfreien Nanoton um einen unmodifizierten Natriummontmorillonit-Nanoton handelt und die Menge des Nanotons sich auf 0,1-10 Gew.-%, vorzugsweise 0,1-5 Gew.-%, weiter bevorzugt 0,1-1,0 Gew.-%, weiter bevorzugt 0,3-1,0 Gew.-%, noch weiter bevorzugt 0,5-1,0 Gew.-%, des Gesamtgewichts der Monomere und der Polymere in der Ausgangszusammensetzung beläuft.

10. Verfahren nach einem der vorhergehenden Ansprüche, bei dem man in Schritt b) die Ausgangszusammensetzung über einen Zeitraum von 30-120 Minuten, vorzugsweise 70-90 Minuten, auf eine Temperatur von 85-91°C erhitzt.

11. Verfahren nach einem der vorhergehenden Ansprüche, bei dem die durch Schritt b) erhaltene Prepolymerzusammensetzung einen Grad der Umwandlung der Monomere in Polymer von 20-55%, bezogen auf die Monomere, aufweist.

12. Verfahren nach einem der vorhergehenden Ansprüche, bei dem man in Schritt e) die durch Schritt d) erhaltene Suspension über einen Zeitraum von 180-300 Minuten, vorzugsweise 200-280 Minuten, auf eine Temperatur von 125-130°C erhitzt.

13. Wasserexpandierbare Polymerperlen, die durch das Verfahren nach den Ansprüchen 1-12 erhältlich sind.

14. Wasserexpandierbare Polymerperlen, umfassend Polystyrol und ein Polyphenylenetherharz und einen Nanoton und gegebenenfalls ein Copolymer von Styrol und einem polaren Comonomer mit einer Kohlenstoff-Kohlenstoff-Doppelbindung.

15. Expandierte Polymerperlen, die durch Expandieren der wasserexpandierbaren Polymerperlen nach einem der Ansprüche 13-14 erhältlich sind.

## Revendications

1. Procédé de préparation sans émulsifiant de billes polymères expansibles à l'eau, lequel procédé comprend les étapes consistant à :
a) se procurer une composition de départ sans émulsifiant comprenant du styrène et une résine d'éther de polyphénylène,
b) prépolymériser la composition de départ pour obtenir une composition de prépolymère,
c) ajouter une dispersion aqueuse d'une nanoargile sans modificateur à la composition de prépolymère pour obtenir une émulsion inverse,
d) mettre l'émulsion inverse obtenue par l'étape c) en suspension dans un milieu aqueux pour préparer une suspension aqueuse de gouttelettes en suspension et
e) polymériser les monomères dans les gouttelettes de la suspension obtenue par l'étape d) pour obtenir les billes polymères expansibles à l'eau.

2. Procédé selon la revendication 1, dans lequel la résine d'éther de polyphénylène est l'éther de poly(2,6-diméthyl-1,4-phénylène).

3. Procédé selon la revendication 1 ou 2, dans lequel le rapport pondéral entre le styrène et la résine de PPE dans la composition de départ se situe entre 99:1 et 70:30.

4. Procédé selon l'une quelconque des revendications précédentes, dans lequel la composition de départ comprend également du polystyrène.

5. Procédé selon la revendication 4, dans lequel la quantité du polystyrène est de 1-20 % en poids, rapporté au poids total des monomères et des polymères dans la composition de départ.

6. Procédé selon l'une quelconque des revendications précédentes, dans lequel la composition de départ comprend également un comonomère polaire contenant une double liaison carbone-carbone.

7. Procédé selon la revendication 6, dans lequel le comonomère polaire est représenté par le comonomère de formule (1) 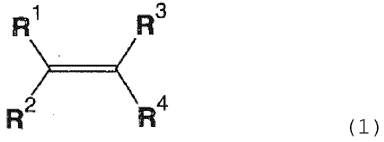 dans laquelle R¹ représente H ou un alkyle ayant 1 à 3 atomes C,
dans laquelle R² représente H ou un acide carboxylique, dans laquelle R³ représente H ou un alkyle éventuellement substitué ayant 1 à 6 atomes C,
dans laquelle R⁴ représente un groupe polaire choisi dans le groupe constitué par un groupe acide carboxylique (COOH), un groupe amide d'acide carboxylique lié par l'atome C (C(O)NH₂), un groupe amide d'acide carboxylique lié par l'atome N (NHC(O)H), un groupe N-pyrrolidinone (structure), un groupe pyridine (structure), un groupe ester alkylique d'acide carboxylique ayant 2 à 4 atomes C substitué par un groupe polaire R⁷, où R⁷ représente un groupe hydroxyle (OH), un groupe amine (NH₂) ou un groupe acide carboxylique (COOH), et un groupe éther ayant 1 à 3 atomes C substitué par un groupe polaire R⁸, où R⁸ représente un groupe hydroxyle (OH), un groupe amine primaire, secondaire ou tertiaire (NR⁵R⁶, où R⁵ et R⁶) ou un groupe acide carboxylique (COOH) et
dans laquelle R² et R⁴ peuvent former un cycle conjointement avec les atomes C auxquels ils sont liés et dans laquelle R³ et R⁴ peuvent former un cycle conjointement avec les atomes C auxquels ils sont liés.

8. Procédé selon la revendication 7, dans lequel le comonomère polaire est choisi dans le groupe constitué par : l'acide acrylique (R¹, R² et R³ représentent H et R⁴ représente un groupe acide carboxylique), l'acide méthacrylique (R¹ et R² représentent H, R³ représente un méthyle et R⁴ représente un groupe acide carboxylique), l'acide propylacrylique (R¹ et R² représentent H, R³ représente un i-propyle et R⁴ représente un groupe acide carboxylique), l'acide maléique ou l'acide citraconique (R¹ et R³ représentent un groupe acide carboxylique et R² et R⁴ représentent H), l'acide itaconique (R¹ et R² représentent H, R³ représente un méthyle substitué par un groupe acide carboxylique et R⁴ représente un groupe acide carboxylique), l'acide mésaconique (R¹ représente un méthyle, R² représente un groupe acide carboxylique, R³ représente H et R⁴ représente un groupe acide carboxylique), l'acrylamide (R¹, R² et R³ représentent H et R⁴ représente un groupe amide lié par l'atome C), le méthacrylamide (R¹ et R² représentent H, R³ représente un méthyle et R⁴ représente un groupe amide lié par l'atome C), la vinylpyrrolidinone (R¹, R² et R³ représentent H et R⁴ représente la pyrrolidinone), le N-vinylformamide (R¹, R² et R³ représentent H et R⁴ représente un groupe amide lié par l'atome N), la vinylpyridine (R¹, R² et R³ représentent H et R⁴ représente la pyridine), l'acrylate de 2-hydroxyéthyle (R¹, R² et R³ représentent H et R⁴ représente l'ester éthylique d'acide carboxylique substitué par un groupe hydroxyle), le méthacrylate de 2-hydroxyéthyle (R¹ et R² représentent H, R³ représente un méthyle et R⁴ représente l'ester éthylique d'acide carboxylique substitué par un groupe hydroxyle), l'éther vinylique de 2-hydroxyéthyle (R¹, R² et R³ représentent H et R⁴ représente un éther éthylique substitué par un groupe hydroxyle), l'acrylate de 2-aminoéthyle (R¹, R² et R³ représentent H et R⁴ représente l'ester éthylique d'acide carboxylique substitué par un groupe amine), l'éther vinylique de 2-aminoéthyle (R¹, R² et R³ représentent H et R⁴ représente un éther éthylique substitué par un groupe amine), l'anhydride d'acide citraconique (R¹ représente un méthyle, R² et R⁴ forment un cycle conjointement avec les atomes de carbone auxquels ils sont liés et le cycle contient un atome O et R³ représente H), l'anhydride d'acide itaconique et l'anhydride d'acide maléique (R¹ et R³ représentent H et R² et R⁴ forment un cycle conjointement avec les atomes de carbone auxquels ils sont liés et le cycle contient un atome O).

9. Procédé selon l'une quelconque des revendications précédentes, dans lequel la nanoargile sans modificateur est une nanoargile de montmorillonite sodique non modifiée et la quantité de la nanoargile est de 0,1-10 % en poids, de préférence 0,1-5 % en poids, mieux 0,1-1,0 % en poids, mieux encore 0,3-1,0 % en poids, encore mieux 0,5-1,0 % en poids, rapporté au poids total des monomères et des polymères dans la composition de départ.

10. Procédé selon l'une quelconque des revendications précédentes, dans lequel l'étape b) implique le chauffage de la composition de départ à une température de 85-91 °C, pendant une période de 30-120 minutes, de préférence pendant 70-90 minutes.

11. Procédé selon l'une quelconque des revendications précédentes, dans lequel la composition de prépolymère obtenue par l'étape b) a un degré de conversion des monomères en polymère de 20 à 55 %, rapporté aux monomères.

12. Procédé selon l'une quelconque des revendications précédentes, dans lequel l'étape e) implique le chauffage de la suspension obtenue par l'étape d) à une température de 125-130 °C pendant une période de 180-300 minutes, de préférence pendant 200-280 minutes.

13. Billes polymères expansibles à l'eau pouvant être obtenues par le procédé selon les revendications 1 à 12.

14. Billes polymères expansibles à l'eau comprenant du polystyrène et une résine d'éther de polyphénylène et une nanoargile et éventuellement un copolymère de styrène et d'un comonomère polaire contenant une double liaison carbone-carbone.

15. Billes polymères expansées pouvant être obtenues en dilatant les billes polymères expansibles à l'eau selon l'une quelconque des revendications 13 et 14.
